# EUROPEAN PATENT APPLICATION

(11) **EP 4 831 615 A1**
(43) Date of publication of application: **28.10.2026**
(21) Application number: 26172942.0
(22) Date of filing: 17.04.2026
(51) Int. Cl.: G01N 17/00, G01N 17/02

(54) **CORROSION RESISTANCE TEST METHOD AND CORROSION RESISTANCE TEST APPARATUS**

(30) Priority: 23.04.2025 JP 2025071847
(71) Applicant: MAZDA MOTOR CORPORATION, Hiroshima 730-8670 (JP)
(72) Inventor: Sakamoto, Ken, Aki-gun, Hiroshima, 730-8670 (JP); Asada, Teruaki, Aki-gun, Hiroshima, 730-8670 (JP); Ezaki, Tatsuya, Aki-gun, Hiroshima, 730-8670 (JP); Sasaki, Katsunobu, Aki-gun, Hiroshima, 730-8670 (JP); Yoshida, Keita, Aki-gun, Hiroshima, 730-8670 (JP); Oue, Koichi, Aki-gun, Hiroshima, 730-8670 (JP); Shinomori, Masatoshi, Aki-gun, Hiroshima, 730-8670 (JP)
(74) Representative: Lorenz Seidler Gossel Part. mbB

(57) **Abstract**

Corrosion resistance test apparatus and method having multiple test units (2) connected in series and provided with switching means (5) that disconnects the test unit (2) from the series circuit (3) and forms the series circuit (3) in place of the test unit (2), and voltage detecting means (6) that detects a voltage in the test unit (2). The circuit switching step involves monitoring the voltage of each test unit (2) detected by the voltage detecting means (6) in the energization step and disconnecting, from the series circuit (3), the test unit (2) in which the voltage has exceeded a predetermined threshold value.

## Description

### BACKGROUND OF THE INVENTION

### 1. Field of the Invention

The present disclosure relates to corrosion resistance test methods and corrosion resistance test apparatuses for coated metal members.

### 2. Description of the Related Art

In the related art, accelerated corrosion tests, such as combined cycle tests and salt-spray tests, have been performed for evaluating coating performance. However, since such an accelerated corrosion test requires several months for an evaluation, it is difficult to simply evaluate the state of a coating with different components and different baking conditions of, for example, a coated steel plate and to quickly optimize the coating conditions. Therefore, in material development sites, process management sites of coating factories, and quality management sites related to automotive corrosion prevention, there are demands for establishing a quantitative evaluation method for quickly and easily evaluating the corrosion resistance of coated steel plates.

For example, Japanese Patent No. 6801805 discloses a corrosion resistance test method that involves measuring the size of a blister of a surface treatment coating formed on a coated metal member formed of a metallic substrate provided with the surface treatment coating. This method involves disposing a water-containing material, which comes into contact with the blister, and an electrode, which comes into contact with the water-containing material, electrically connecting the electrode and the metallic substrate to each other, and applying a constant voltage between the electrode and the metallic substrate and measuring a current value flowing therebetween. The degree of progression of corrosion of the coated metal member is measured in accordance with the degree of progression of blistering.

### SUMMARY OF THE INVENTION

In the above method, the time it takes from the preparation to the completion of measurement in a single test is long. In order to make the test efficient, it is conceivable to connect multiple test units in series to a single power source so as to set a fixed current value to be applied to the multiple test units, and to perform multiple tests simultaneously. However, clogging may sometimes occur at a test location due to air bubbles generated during a test or due to solid content included in a test solution. Clogging occurring in one of the test units makes it difficult for the electric current to flow to another series-connected test unit, thus making it difficult to perform the tests accurately and stably.

An object of the present disclosure is to perform a corrosion resistance test for a coated metal member accurately and efficiently when multiple test units are used to perform tests simultaneously.

In order to achieve the aforementioned object, an aspect of a corrosion resistance test method for a coated metal member disclosed here relates to a corrosion resistance test method for a coated metal member formed of a metallic substrate provided with a surface treatment coating. The corrosion resistance test method includes: a preparation step for preparing a series circuit, switching means, and voltage detecting means, the series circuit having a plurality of test units connected in series, each test unit having an energizing section configured to energize a test target location of the coated metal member, the switching means being configured to disconnect the test unit from the series circuit and form the series circuit in place of the test unit, the voltage detecting means being configured to detect a voltage in the test unit; an energization step for applying a constant voltage or a constant current to the series circuit by using energizing means provided in the series circuit to cause corrosion of the coated metal member to progress; a circuit switching step for monitoring the voltage of each test unit detected by the voltage detecting means in the energization step and disconnecting, from the series circuit, the test unit in which the voltage has exceeded a predetermined threshold value.

According to this configuration, the multiple test units are connected in series to a single power source, so that a voltage value or a current value applied to the respective test units can be fixed, and multiple tests can be simultaneously performed. In a test method that causes corrosion of a coated metal member to progress by energization, clogging occurring at a test target location due to air bubbles generated during the test or due to solid content included in a test solution may cause the voltage to increase, thus making it difficult to perform the test accurately and efficiently. In contrast, in this configuration, even if the voltage value or the current value applied to the respective test units is fixed, the voltage applied to the test units varies depending on the degree of clogging of each test unit. Therefore, by monitoring the voltage, it can be determined whether or not clogging has occurred. For example, it is determined that a test unit in which the voltage has exceeded the predetermined value is clogged at the test target location among the multiple test units, and the circuit is switched so that the test unit is disconnected from the series circuit, whereby the multiple tests can be performed accurately and efficiently without affecting another test unit.

As an aspect of the corrosion resistance test method, the corrosion resistance test method may further include: an energization inspection step for controlling the switching means to connect the test unit disconnected from the series circuit to the series circuit and energize the test unit at every predetermined time interval, and inspecting whether or not the voltage of the test unit detected by the voltage detecting means during energization exceeds the predetermined threshold value; a test resuming step for causing the test unit to be continuously connected to the series circuit and causing the corrosion of the coated metal member to resume when the voltage of the test unit does not exceed the predetermined threshold value in the energization inspection step; and a test-time-period adjustment step for disconnecting, from the series circuit, the test unit for which a predetermined energization time period has elapsed and terminating a test, and compensating for an energization time period corresponding to a time period during which the test unit that has resumed the corrosion of the coated metal member in accordance with the test resuming step is disconnected from the series circuit.

With regard to a test unit disconnected from the series circuit due to clogging, the clogging may sometimes be resolved over time. In this configuration, the test unit disconnected from the series circuit is energized by being connected again to the series circuit after a predetermined time period, so that it can be checked whether the clogging has been resolved. If the voltage detected during the reconnection to the series circuit does not reach the predetermined value, the corrosion resistance test in the series circuit of the test unit is resumed by determining that the clogging has been resolved. If the voltage detected during the reconnection to the series circuit does reach the predetermined value, the test unit is disconnected again from the series circuit by determining that the clogging has not been resolved, whereby the test efficiency can be further enhanced. Moreover, for the test unit that has been reconnected to the series circuit, the test is continued while compensating for the energization time period corresponding to the disconnection time period from the series circuit, so that the test time period can be adjusted, thereby preventing a decrease in the test efficiency and the test accuracy.

As an aspect of the corrosion resistance test method, the preparation step may further include preparing heating means configured to heat the test target location of the coated metal member, the energization step may include causing the corrosion of the coated metal member to progress by applying the constant voltage or the constant current to the series circuit while heating the test target location of the coated metal member to a predetermined temperature, and the test unit for which the predetermined energization time period has elapsed may be disconnected from the series circuit, the heating may be stopped or the test target location may be decreased in temperature, and the test may be terminated.

According to this configuration, the energization of a test unit for which an evaluation is completed is stopped, and the heating is stopped or the test target location is decreased in temperature, so that drying and further corrosion progression of the evaluation target are prevented, thereby improving the test accuracy and preventing variation in evaluation results when evaluations are performed simultaneously using the multiple test units.

Each of the test units may have a container configured to retain a water-containing material in contact with the surface treatment coating, and an electrode configured to come into contact with the water-containing material contained in the container. The energizing means may cause the corrosion of the coated metal member to progress by applying a direct-current constant voltage or constant current between the electrode and the metallic substrate, the electrode serving as an anode and the metallic substrate serving as a cathode.

In this description, the expression "test target location of a coated metal member" refers to a portion of the coated metal member that corresponds to a contact region between the water-containing material and the surface treatment coating.

An aspect of a corrosion resistance test apparatus for a coated metal member disclosed here relates to a corrosion resistance test apparatus for a coated metal member formed of a metallic substrate provided with a surface treatment coating. The corrosion resistance test apparatus includes: test units each having an energizing section configured to energize a test target location of the coated metal member; a series circuit having the plurality of test units connected in series; energizing means provided in the series circuit and configured to apply a constant voltage or a constant current to the series circuit to cause corrosion of the coated metal member to progress; switching means configured to disconnect each test unit from the series circuit and form the series circuit in place of the test unit; voltage detecting means configured to detect a voltage in each test unit; and a control device configured to use the voltage detecting means to monitor the voltage of each test unit and use the switching means to disconnect, from the series circuit, the test unit in which the voltage has exceeded a predetermined threshold value.

According to this configuration, the multiple test units are connected in series to a single power source, so that a voltage value or a current value applied to the respective test units can be fixed, and multiple tests can be simultaneously performed. In a test method that causes corrosion of a coated metal member to progress by energization, clogging occurring at a test target location due to air bubbles generated during the test or due to solid content included in a test solution may cause the voltage to increase, thus making it difficult to perform the test accurately and efficiently. In this configuration, even if the voltage value or the current value applied to the respective test units is fixed, the voltage applied to the test units varies depending on the degree of clogging of each test unit. Therefore, by monitoring the voltage, it can be determined whether or not clogging has occurred. For example, it is determined that a test unit in which the voltage has exceeded the predetermined value is clogged at the test target location among the multiple test units, and the circuit is switched so that the test unit is disconnected from the series circuit, whereby the test can be performed accurately and efficiently without affecting another test unit.

As mentioned above, according to the present disclosure, when the multiple test units are to be evaluated simultaneously in the corrosion resistance test for the coated metal member, the tests can be performed accurately and efficiently.

### BRIEF DESCRIPTION OF THE DRAWINGS

Fig. 1 is a schematic configuration diagram illustrating an example of a corrosion resistance test apparatus according to a first embodiment;
Fig. 2 illustrates an example of a test unit;
Fig. 3 is a flowchart for explaining a corrosion resistance test method according to the first embodiment;
Fig. 4 is a schematic diagram of a test target location and illustrates a state where clogging has occurred due to hydrogen gas;
Fig. 5 is a schematic configuration diagram illustrating an example of a corrosion resistance test apparatus according to a second embodiment;
Fig. 6 is a schematic configuration diagram illustrating an example of a corrosion resistance test apparatus according to a third embodiment; and
Fig. 7 illustrates another embodiment of test units.

### DESCRIPTION OF THE PREFERRED EMBODIMENTS

Embodiments of the present disclosure will be described in detail below with reference to the drawings. The description of the following preferred embodiments is substantially exemplary and is not intended whatsoever to limit the present disclosure, the application thereof, or the purpose thereof.

### Corrosion Resistance Test Apparatus for Coated Metal Member First Embodiment

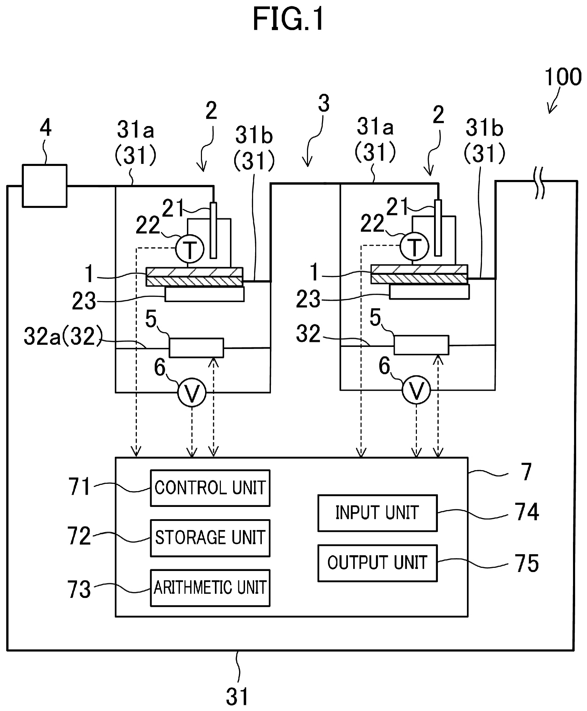

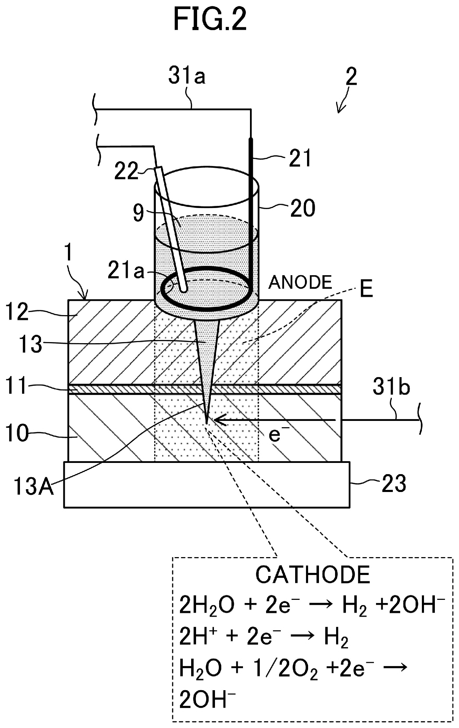

Fig. 1 is a schematic configuration diagram illustrating an example of a corrosion resistance test apparatus according to a first embodiment, and Fig. 2 illustrates an example of a test unit. As shown in Fig. 1, a corrosion resistance test apparatus 100 according to this embodiment is used in a corrosion resistance test method for a coated metal member 1 formed of a metallic substrate 10 provided with a surface treatment coating 12, and includes: a test unit 2 for testing the coated metal member 1; a series circuit 3; energizing means 4; switching means 5; voltage detecting means 6; and a control device 7. The corrosion resistance test apparatus 100 according to this embodiment is an apparatus for simultaneously performing multiple tests by applying a constant voltage or a constant current to multiple test units 2 from single energizing means 4.

### Coated Metal Member

As shown in Fig. 2, the coated metal member 1 as a test target in a corrosion resistance test according to this embodiment is, for example, a coated metal member 1 formed of a metallic substrate 10 provided with a resin coating as a surface treatment coating 12.

The metallic substrate 10 is, for example, a steel member constituting a household electrical appliance, a construction material, or an automotive component. For example, the metallic substrate may be a steel plate cold (SPC), an alloyed hot dip galvanized steel sheet (GA), a high-tensile steel plate, or a hot-stamped material, or may be a light-alloy material. The metallic substrate is preferably a steel plate for an automotive component. The metallic substrate may have a chemical conversion coating (such as a phosphate coating (e.g., a zinc phosphate coating) or a chromate coating) on the surface thereof.

The resin coating 12 is formed by using a resin-based coating material, and is preferably an electrodeposition coating. A coated metal member formed of a metallic substrate provided with a resin coating as a surface treatment coating is suitable as a test target in this corrosion resistance test due to being prone to corrosion progression when energized. A specific example of the resin coating is an epoxy-resin-based or acrylic-resin-based cationic electrodeposition coating (i.e., an undercoating).

The coated metal member may include a multilayer coating having two or more layers as the surface treatment coating. In detail, for example, if the surface treatment coating is a resin coating, the surface treatment coating may be a multilayer coating formed by stacking an overcoating over an electrodeposition coating, or may be a multilayer coating formed by stacking an intermediate coating and an overcoating over an electrodeposition coating.

The following description relates to an example where the coated metal member 1 has an electrodeposition coating 12 (resin coating) serving as the surface treatment coating 12 provided on a metallic substrate having a chemical conversion coating 11 on the surface of a steel plate 10 (i.e., the metallic substrate 10).

The coated metal member 1 has a single scratch 13 that is located at a test target location E and that extends through the electrodeposition coating 12 and the chemical conversion coating 11 to reach the steel plate 10. The scratch 13 may be provided or need not be provided. The scratch 13 may be formed artificially or may be formed naturally.

### Test Units

The test units 2 are used in the corrosion resistance test for the coated metal member. First, the principle of the corrosion resistance test according to this embodiment will be described.

A coated metal member provided with a surface treatment coating starts to corrode when a corrosion factor, such as salt water, penetrates the surface treatment coating and reaches a metallic substrate. Specifically, the corrosion process of the coated metal member is divided into a process up to the occurrence of corrosion and a process during which the corrosion progresses. An evaluation can be performed by determining the period (i.e., corrosion suppression period) up until the corrosion starts and the rate at which the corrosion progresses (i.e., corrosion progression rate).

Normally, metal corrosion is known to progress through a simultaneous occurrence of an anodic reaction (oxidation reaction), in which metal in contact with water dissolves (is ionized) to generate free electrons, and a cathodic reaction (reduction reaction), in which dissolved oxygen and the like in the water generate hydroxide ions (OH⁻) using the free electrons.

In this configuration, electric power is applied between an electrode 21 and the steel plate 10, with the former serving as an anode and the latter serving as a cathode. In the case where electric power is applied with the electrode 21 serving as an anode and the steel plate 10 serving as a cathode, when a water-containing material 9 that has penetrated into the surface treatment coating reaches the steel plate 10, a cathodic reaction proceeds at a contact section between the water-containing material 9 and the steel plate 10. For example, under an energization condition where a voltage higher than or equal to a theoretical voltage at which hydrogen is generated by electrolysis of water (i.e., 1.23 V when the system temperature is 25°C) is applied or a current requiring such a voltage is applied, electrolysis of water also proceeds, and hydrogen gas is generated.

When the cathodic reaction proceeds, an alkaline environment is formed around the contact section between the water-containing material and the metallic substrate due to generation of OH⁻. This causes a base treatment (chemical conversion treatment) on the surface of the metallic substrate to become damaged, thus causing adhesion of the surface treatment coating to decrease (or simply causing adhesion between the metallic substrate and the surface treatment coating to decrease when no base treatment is provided). This leads to lifting of the surface treatment coating at the contact section and an occurrence of blistering of the surface treatment coating. The surface treatment coating with the decreased adhesion to the metallic substrate in the alkaline environment is further pushed upward by the hydrogen gas occurring due to the electrolysis of water and the reduction of H⁺, causing the blistering of the surface treatment coating to proceed. The progress of such a cathodic reaction and the occurrence and progression of blistering of the surface treatment coating accelerate and reproduce actual corrosion of the coated metal member. Specifically, in this description, the expression "corrosion of the coated metal member progresses" means that "blistering of the surface treatment coating occurs and proceeds". Therefore, for example, by checking the occurrence and the degree of progression of blistering of the surface treatment coating at the contact section, the degree of progression of corrosion of the coated metal member can be measured.

Each test unit 2 includes a container 20, the electrode 21, a temperature sensor 22, and heating means 23. Although the multiple test units 2 included in the corrosion resistance test apparatus 100 according to this embodiment basically have the same configuration, the temperature and the test time period may be set for each test unit 2. In the multiple test units, the coated metal members 1 serving as test targets may be identical to each other or may be different from each other.

The container 20 is placed on the electrodeposition coating 12 of the coated metal member 1 with a leak-proof sealing member (not shown) interposed therebetween. The container 20 contains the water-containing material 9 therein. While being contained within the container 20, the water-containing material 9 is in contact with the surface of the electrodeposition coating 12 at the test target location E. Specifically, the container 20 retains the water-containing material 9 in contact with the electrodeposition coating 12 at the test target location E.

The container 20 is not particularly limited in shape and may have, for example, a tubular shape, such as a cylindrical shape or a polygonal shape. The container 20 may be composed of a resin material, such as acrylic resin, epoxy resin, or aromatic polyether ether ketone (PEEK), or a ceramic material. In particular, the container 20 may preferably be composed of a resin material, such as acrylic resin, epoxy resin, or aromatic polyether ether ketone (PEEK). Accordingly, each test unit 2 can be reduced in weight and cost while insulation properties between the container 20 and the outside can be ensured.

The water-containing material 9 contains water and a supporting electrolyte, and functions as a conductive material. The water-containing material 9 may be a slurry-like material further containing a clay mineral. If the water-containing material 9 contains a clay mineral, the ions and water in the water-containing material 9 can readily penetrate the electrodeposition coating 12 in an energization step S2 to be described later.

The supporting electrolyte is salt and is provided for adding sufficient conductivity to the water-containing material 9. In detail, for example, the supporting electrolyte used may be at least one salt selected from sodium chloride, sodium sulfate, calcium chloride, calcium phosphate, potassium chloride, potassium nitrate, potassium hydrogen tartrate, and magnesium sulfate. In particular, the supporting electrolyte used may preferably be at least one salt selected from sodium chloride, sodium sulfate, and calcium chloride. The amount of supporting electrolyte contained in the water-containing material 9 preferably ranges between 1% by mass and 20% by mass inclusive, more preferably ranges between 3% by mass and 15% by mass inclusive, and even more preferably ranges between 5% by mass and 10% by mass inclusive.

The clay mineral turns the water-containing material 9 into a slurry-like material and is provided for accelerating the movement of ions and the penetration of water into the electrodeposition coating 12 so as to promote the progression of corrosion in the energization step S2. An example of the clay mineral used may be a layered silicate mineral or zeolite. An example of the layered silicate mineral used may be at least one selected from kaolinite, montmorillonite, sericite, illite, glauconite, chlorite, and talc, and may preferably be kaolinite. The amount of clay mineral contained in the water-containing material preferably ranges between 1% by mass and 70% by mass inclusive, more preferably ranges between 10% by mass and 50% by mass inclusive, and even more preferably ranges between 20% by mass and 30% by mass inclusive. With the water-containing material 9 being a slurry-like material, the water-containing material 9 can be provided on the surface of the electrodeposition coating 12 even in a case where the electrodeposition coating 12 is not horizontal.

The water-containing material 9 may further contain an additive other than water, the supporting electrolyte, and the clay mineral. Specific examples of such an additive include an organic solvent, such as acetone, ethanol, toluene, or methanol, and a material that enhances coating wettability. Such an organic solvent and/or material may also have the function for accelerating the penetration of water into the electrodeposition coating 12. Such an organic solvent and/or material may be added to the water-containing material 9 in place of the clay mineral. In a case where the water-containing material 9 contains an organic solvent, the amount of organic solvent contained therein preferably ranges between 5% and 60% in terms of the volume ratio relative to water. This volume ratio preferably ranges between 10% and 40% inclusive, and more preferably ranges between 20% and 30% inclusive.

The electrode 21 and the steel plate 10 are energizing sections that energize the test target location in each test unit 2. The electrode 21 is disposed apart from the electrodeposition coating 12 at the electrodeposition coating 12 side of the coated metal member 1. The water-containing material 9 is disposed between the electrodeposition coating 12 and the electrode 21 so as to be in contact with the two. In detail, the electrode 21 is provided such that at least the distal end thereof is immersed in the water-containing material 9, and is in contact with the water-containing material 9.

The electrode 21 used may be an electrode commonly used in electrochemical measurement. Specific examples include a carbon electrode and a platinum electrode.

The shape of the electrode 21 may be a shape commonly used in electrochemical measurement, such as a rod-like shape or a plate-like shape. For example, the electrode 21 used may be a perforated electrode having at least one hole at the distal end thereof. For example, if a perforated electrode with a ring-shaped distal end is used, the perforated electrode may be disposed such that the ring is substantially parallel to the electrodeposition coating 12. Alternatively, a meshed electrode may be used as the perforated electrode, and may be disposed substantially parallel to the electrodeposition coating 12 in a state where the meshed electrode is immersed in the water-containing material 9.

The temperature sensor 22 is inserted into the container 20 to measure the temperature of the water-containing material 9. Specific examples of the temperature sensor 22 include a thermocouple, an optical-fiber-based thermometer, and an infrared thermometer. In the corrosion resistance test according to this embodiment, the temperature of the water-containing material 9, particularly, the temperature of the water-containing material 9 near the electrodeposition coating 12, is important. The temperature sensor 22 accurately detects the temperature of the water-containing material 9 near the electrodeposition coating 12, so that the reliability of the corrosion resistance test is improved.

The heating means 23 is provided for heating and adjusting the temperatures of the water-containing material 9 and the coated metal member 1. The heating means 23 is provided at, for example, the steel plate 10 side of the coated metal member 1. Specific examples of the heater include a hot plate or a Peltier element. The heater 23 is electrically connected or wirelessly connected to the control device 7, to be described later, so as to be controlled by the control device 7. By being controlled by the control device 7, for example, the heater 23 can set a different temperature and a different heating period for each test unit 2.

By using the heater 23, the water-containing material 9 and the coated metal member 1 can be appropriately heated and temperature-adjusted, thereby accelerating the movement of ions and the penetration of water into the electrodeposition coating 12 and effectively causing the corrosion to progress. This enables a corrosion resistance test that is completed within a shorter period of time and that is highly reliable. Furthermore, since the temperatures of the water-containing material 9 and the coated metal member 1 can be maintained constant over a desired test time period, a highly-reliable corrosion resistance test can be performed under a desired temperature condition.

The heater 23 is not limited to that provided at the steel plate 10 side as in Fig. 2, and may be provided on the electrodeposition coating 12 of the coated metal member 1 so as to cover the container 20 in the vicinity of the container 20 or at the outer side of the container 20. Specific examples include a rubber heater and a film heater. Furthermore, the heater 23 is not limited to that provided for each test unit 2 as in Fig. 1, and may be a single heater that can perform heating and temperature adjustment for multiple coated metal members 1.

### Series Circuit

The series circuit 3 includes wiring 31, the multiple test units 2 disposed on the wiring 31, and the energizing means 4. The wiring 31 connects the multiple test units 2 and the energizing means 4 in series, thereby forming the series circuit 3. The wiring 31 includes a wire 31a that connects to the electrode 21 (energizing section) of each test unit 2, and a wire 31b that connects to the steel plate 10 (energizing section). The wiring 31 used may be of a known type, where appropriate.

### Energizing Means

The energizing means 4 is connected to the electrode 21 and the steel plate 10 by the wiring 31, and is provided in the series circuit 3. The energizing means 4 functions as a power supply unit that applies electric power between the electrode 21 and the steel plate 10, that is, applies a voltage and/or current therebetween. As will be described later, the energizing means 4 applies a direct-current constant current or a direct-current constant voltage or constant current between the electrode 21 and the steel plate 10 in the energization step S2, with the former serving as an anode and the latter serving as a cathode. A specific example of the energizing means 4 used may be a potentiostat/galvanostat controllable as a method of voltage/current application. The energizing means 4 is electrically connected or wirelessly connected to the control device 7, to be described later, so as to be controlled by the control device 7. Energization information, such as a current value and a voltage value applied to the series circuit 3 by the energizing means 4 and the energization time period, is transmitted to the control device 7 and is stored in a storage unit 72. Switching Means

The switching means 5 is connected to a wire 32a that forms a bypass circuit 32 with respect to each test unit 2. The switching means 5 disconnects the test unit 2 from the series circuit 3 and forms a series circuit by using the bypass circuit 32 in place of the test unit 2. The switching means 5 is, for example, a current control element formed of a field-effect transistor (FET). The switching means 5 controls a current to be supplied to the wire 31a or the wire 32a based on a voltage detected by the voltage detecting means 6, to be described later, and a predetermined voltage value. For example, when the voltage of the test unit 2 reaches a predetermined value or more, the switching means 5 causes a current to flow to the bypass circuit 32, so that the bypass circuit 32 forms a series circuit, whereby the test unit 2 becomes disconnected from the series circuit 3. The switching means 5 is electrically connected or wirelessly connected to the control device 7, to be described later, so as to be controlled by the control device 7. Energization information, such as the energization time period in which the test unit 2 is energized in the series circuit 3, is transmitted to the control device 7 by the switching means 5 and is stored in the storage unit 72.

### Voltage Detecting Means

The voltage detecting means 6 is provided for each test unit 2 and detects a voltage of the test unit 2 at the time of energization. The voltage detecting means 6 is, for example, a resistor. The voltage detecting means 6 is electrically connected or wirelessly connected to the control device 7, to be described later, and outputs a voltage value to the control device 7. Information, such as the detected voltage of the test unit 2, is transmitted to the control device 7 by the voltage detecting means 6 and is stored in the storage unit 72.

For example, if clogging has occurred in any of the test units, the voltage of the test unit 2 detected by the voltage detecting means 6 ranges between 3V and 4V. When the voltage of the test unit 2 detected by the voltage detecting means 6 changes to a range of 10 V to 100 V, it can be determined that clogging has occurred in the test unit.

### Control Device

The control device 7 is, for example, a known microcomputer-based device and includes a control unit 71, the storage unit 72, and an arithmetic unit 73. Furthermore, the control device 7 includes an input unit 74 including, for example, a keyboard, and an output unit 75 including, for example, a display. The control device 7 is electrically connected or wirelessly connected to the temperature sensor 22, the heater 23, the energizing means 4, the switching means 5, the voltage detecting means 6, and the like. Based on various types of predetermined arithmetic programs, the control device 7 controls the temperature sensor 22, the energizing means 4, the switching means 5, and the like. The control device 7 performs various kinds of arithmetic and determination processes based on information output from the temperature sensor 22, the energizing means 4, the switching means 5, the voltage detecting means 6, and the like, and performs control, such as temperature adjustment and on/off control of the heater 23, on/off control of the energizing means 4, control of a voltage value/current value to be applied to the series circuit by the energizing means 4, and control of circuit switching by the switching means 5, based on the arithmetic or determination results.

The storage unit 72 includes a random access memory (RAM) and a read only memory (ROM), and stores information, such as various types of data and an arithmetic processing program. The arithmetic unit 73 performs various types of arithmetic processes based on the aforementioned information stored in the storage unit 72, information input via the input unit 74, information acquired from various types of recording media via a reading unit, and the like. The control unit 71 outputs a control signal to a control target and performs various types of control based on data stored in the storage unit 72, an arithmetic result of the arithmetic unit 73, and the like.

The storage unit 72 has preliminarily stored therein a voltage value as a threshold value to be used when clogging occurs in any of the test units 2. The arithmetic unit 73 determines whether or not a voltage of the test unit 2 input from the voltage detecting means 6 is greater than or equal to the threshold value. If the voltage of the test unit 2 input from the voltage detecting means 6 is greater than or equal to the threshold value, it can be determined that clogging has occurred in the test unit. When a voltage greater than or equal to the threshold value is detected, the control unit 71 controls the switching means 5 such that the bypass circuit 32 forms a series circuit and the test unit 2 is disconnected from the series circuit 3.

Furthermore, for example, the storage unit 72 may store a control program to be executed after the test unit 2 is disconnected from the series circuit. The control program involves connecting the test unit 2 disconnected from the series circuit 3 to the series circuit 3 and energizing the test unit 2 at every predetermined time interval. Based on such a control program, the control unit 71 controls the switching means 5 to connect the test unit disconnected from the series circuit to the series circuit and energize the test unit at every predetermined time interval. The predetermined time interval is, for example, every 1 to 10 minutes. If the voltage of the test unit does not exceed the predetermined threshold value, the control unit 71 causes the test unit 2 to be continuously connected to the series circuit 3, so as to cause corrosion of the coated metal member 1 to resume.

Furthermore, for example, the storage unit 72 may store a test program for setting a test time period, a test temperature, and the like for each test unit. Based on such a test program, for every test unit, the control unit 71 performs a temperature adjustment and on/off control of the heater 23, as well as control of the switching means 5. Based on the test program, the control unit 71 disconnects, from the series circuit, a test unit for which a predetermined energization time period has elapsed, and terminates the test. Furthermore, based on the test program, the control unit 71 controls the heater 23 in the test unit for which the predetermined energization time period has elapsed to stop the heating or to decrease the temperature of the test target location, and terminates the test.

For a test unit that is disconnected from the series circuit while clogging has occurred and for which the test is resumed in the series circuit after the clogging is resolved, the arithmetic unit 73 calculates a test time period required after the test is resumed based on a predetermined test time period and a time period during which the test unit is disconnected from the series circuit. Then, the control unit 71 causes the energizing means 4 and the switching means 5 to perform energization by controlling them, so as to compensate for the energization time period corresponding to the time period during which the test unit is disconnected from the series circuit.

The arithmetic unit 73 can also calculate the degree of progression of the aforementioned corrosion based on at least one of a temporal change in the current value, a temporal change in the voltage value, and a temporal change in the resistance value occurring between the electrode 21 and the steel plate 10 due to application of a direct-current constant current or a direct-current constant voltage or constant current by the energizing means 4. Corrosion Resistance Test Method for Coated Metal Member

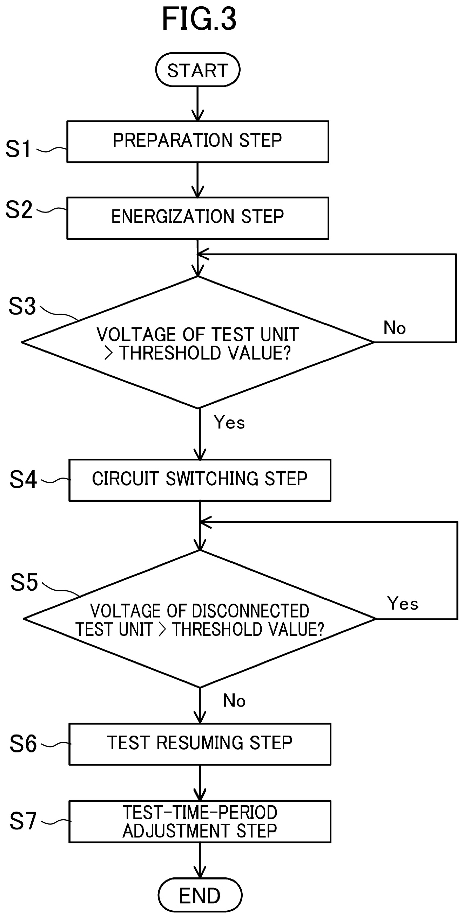

Fig. 3 is a flowchart for explaining the corrosion resistance test method according to this embodiment. The corrosion resistance test method according to this embodiment will be described below with reference to Fig. 3.

As shown in Fig. 3, the corrosion resistance test method includes a preparation step S1, an energization step S2, a clogging determination step S3, a circuit switching step S4, an energization inspection step S5, a test resuming step S6, and a test-time-period adjustment step S7. Each of the steps will be described below.

### Preparation Step

In the preparation step S1, the series circuit 3 including the multiple test units 2 each having the energizing sections (i.e., the electrode 21 and the steel plate 10) that energize the test target location of the coated metal member 1, the bypass circuit 32 including the switching means 5, and the voltage detecting means 6 that detects the voltage in each test unit 2 are prepared.

The coated metal member 1 preferably has the single scratch 13 that extends through the electrodeposition coating 12 and the chemical conversion coating 11 to reach the steel plate 10. The scratch 13 in the coated metal member 1 does not have to be formed, but is preferably formed for the following reason. Specifically, with the scratch 13 extending through the electrodeposition coating 12 and the chemical conversion coating 11 to reach the steel plate 10, when the water-containing material 9 comes into contact with the scratch 13, the water-containing material 9 enters the scratch 13 and comes into contact with the steel plate 10 exposed through the scratch 13. Therefore, with the addition of the scratch 13, it is possible to artificially create a state where, among the above-described corrosion processes of the coated metal member 1, the process up to the occurrence of corrosion has been completed, that is, a state corresponding to the end of the corrosion suppression period.

For example, with regard to each test unit 2, the container 20 is first set on the surface of the electrodeposition coating 12 on a test piece of the coated metal member 1 with a sealing member interposed therebetween to preferably surround the scratch 13, and the water-containing material 9 is injected into the container 20. Then, the water-containing material 9 is brought into contact with the surface of the electrodeposition coating 12, preferably, the scratch 13. Subsequently, the electrode 21 connected to the wire 31a is immersed into the water-containing material 9. The steel plate 10 has the wire 31b connected thereto. Multiple test units of this type are prepared, and the wires 31a and 31b are connected to another test unit 2 or the energizing means 4. Accordingly, the electrodes 21 and the steel plates 10 in the multiple test units 2 are electrically connected to the energizing means 4 by the series circuit 3. Each of the test units 2 is provided with the bypass circuit 32 and the voltage detecting means 6.

### Energization Step

The energization step S2 involves causing the energizing means 4 to apply a constant voltage or a constant current to the series circuit 3, so as to cause corrosion of the coated metal members 1 to progress in the multiple test units 2. In the energization step S2, a direct-current constant voltage or constant current is preferably applied. For example, each test unit 2 performs the energization using the electrode 21 and the steel plate 10 as an anode and a cathode, respectively, so as to cause corrosion of the steel plate 10 to progress. In the energization step S2, the voltage of the test unit 2 being energized is constantly detected by the voltage detecting means 6, and is monitored by the control device 7.

When the energization is performed using the electrode 21 as an anode and the steel plate 10 as a cathode, a cathode reaction proceeds at the contact section between the water-containing material 9 and the steel plate 10, preferably, at an exposed section 13A of the steel plate 10 in the scratch 13, as shown in Fig. 2. Depending on the energization condition, that is, for example, an energization condition where a voltage higher than or equal to a theoretical voltage at which hydrogen is generated by electrolysis of water (i.e., 1.23 V when the system temperature is 25°C) is applied or a current requiring such a voltage is applied, electrolysis of water also proceeds, and hydrogen is generated.

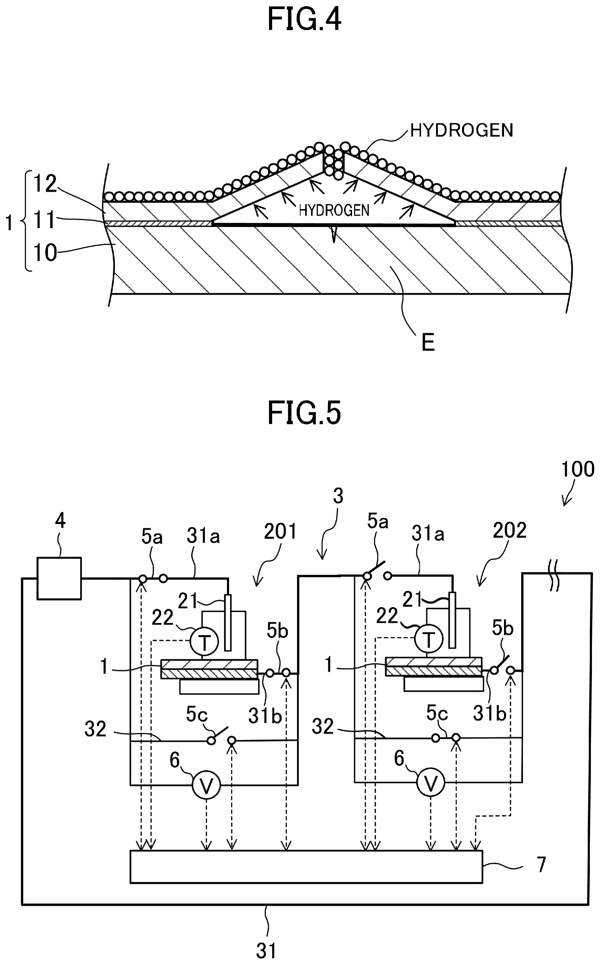

When the cathodic reaction proceeds, blistering of the electrodeposition coating 12 occurs, as shown in Fig. 4. Moreover, the hydrogen gas accelerates the blistering of the electrodeposition coating 12.

The progression of such a cathodic reaction and the progression of blistering of the electrodeposition coating 12, preferably, the progression of the cathodic reaction and the progression of blistering of the electrodeposition coating 12 occurring around the scratch 13, accelerate and reproduce actual corrosion of the coated metal member 1. Specifically, the progression of blistering of the electrodeposition coating 12 is a simulated reproduction of the progression of corrosion of the coated metal member 1.

The constant voltage or the constant current applied in the energization step S2 may require a voltage preferably higher than or equal to 0.05 V, more preferably, higher than or equal to 0.1 V. When the constant voltage or the constant current is less than a lower limit value, the current value becomes too small, possibly increasing a measurement error.

In the energization step S2, the control unit 71 desirably heats and adjusts the temperature of the coated metal member 1 and/or the water-containing material 9. The temperature of the coated metal member 1 and/or the water-containing material 9 preferably ranges between 30°C and 100°C inclusive, more preferably ranges between 50°C and 100°C inclusive, and particularly preferably ranges between 50°C and 80°C inclusive.

As shown in Fig. 4, when hydrogen gas covers the surface of the electrodeposition coating 12, and clogging due to the hydrogen gas occurs at the test target location E, electric current becomes less likely to flow through the test target location E. The clogging at the test target location E may also occur due to solid content included in the water-containing material 9.

### Clogging Determination Step

In the clogging determination step S3, the control device 7 determines whether or not clogging has occurred at the test target location E of the test unit 2. In detail, for example, the storage unit 72 has stored therein a predetermined threshold value as a voltage value when clogging occurs in the test unit 2. The arithmetic unit 73 determines whether or not the voltage of the test unit 2 detected by the voltage detecting means 6 exceeds the threshold value. If the voltage of the test unit 2 input from the voltage detecting means 6 exceeds the threshold value (Yes in step S3), the arithmetic unit 73 determines that clogging has occurred in the test unit 2, and the control unit 71 executes the circuit switching step S4. If the voltage of the test unit 2 input from the voltage detecting means 6 is less than or equal to the threshold value (No in step S3), the arithmetic unit 73 determines that clogging has not occurred in the test unit 2, and the control unit 71 continues with the energization step S2.

For example, the voltage at which it is determined in the clogging determination step S3 that clogging has not occurred in the test unit 2 ranges between 3 V and 4 V, and the threshold value for the voltage at which it is determined that clogging has occurred ranges between, for example, 10 V and 100 V. This threshold value, if set to a high value, may possibly cause areas other than the test target location to become damaged, and therefore more preferably ranges between 20 V and 40 V.

### Circuit Switching Step

The circuit switching step S4 involves disconnecting the test unit 2 determined to be clogged from the series circuit and continuing with the energization in another test unit by the series circuit. The control unit 71 controls the switching means 5 to form a series circuit by using the bypass circuit 32 in place of the clogged test unit 2, and disconnect the relevant test unit 2 from the series circuit 3.

### Energization Inspection Step

The energization inspection step S5 involves connecting the test unit disconnected from the series circuit to the series circuit and energizing the test unit at every predetermined time interval, so as to inspect whether or not the clogging has been resolved. The expression "every predetermined time interval" refers to, for example, every several minutes, and is particularly, for example, every 1 to 10 minutes. The storage unit 72 has stored therein a predetermined threshold value as a voltage value when clogging occurs in the test unit 2. Based on the threshold value, the arithmetic unit 73 determines whether or not the voltage of the test unit 2 detected by the voltage detecting means 6 in the energization inspection step S5 exceeds the threshold value.

If the voltage of the test unit 2 input from the voltage detecting means 6 exceeds the threshold value (Yes in step S5), the arithmetic unit 73 determines that the clogging in the test unit 2 has not been resolved, and the control unit 71 controls the switching means 5 to disconnect the test unit 2 from the series circuit 3. Then, the energization inspection step S5 is repeated by connecting the test unit disconnected from the series circuit to the series circuit at every predetermined time interval until it is determined that the clogging has been resolved in the test unit.

### Test Resuming Step

If the voltage of the test unit 2 input from the voltage detecting means 6 is less than or equal to the threshold value (No in step S5), the arithmetic unit 73 determines that the clogging in the test unit 2 has been resolved. When it is determined that the clogging has been resolved, the control unit 71 causes the test unit 2 to be continuously connected to the series circuit 3 so as to cause the corrosion of the coated metal member 1 to resume in the test resuming step S6.

### Test-Time-Period Adjustment Step

The test-time-period adjustment step S7 involves compensating for an energization time period corresponding to the time period during which the test unit 2 that has resumed the corrosion of the coated metal member in the test resuming step S6 is disconnected from the series circuit 3. In the test-time-period adjustment step S7, the control unit 71 disconnects, from the series circuit, the test unit for which a predetermined energization time period has elapsed, and terminates the test. Furthermore, the control unit 71 stops the heater 23 in the test unit for which the predetermined energization time period has elapsed. Moreover, in the test-time-period adjustment step S7, the control unit 71 energizes the test unit that has resumed the corrosion of the coated metal member in the test resuming step S6 for the disconnection time period from the series circuit, so that a set test time period is satisfied. For example, the test time period of the corrosion resistance test may be set to a range between 0.05 hours and 24 hours inclusive, preferably, a range between 0.1 hours and 10 hours inclusive, and more preferably, a range between 0.1 hours and 5 hours inclusive.

According to the corrosion resistance test apparatus having the above-described configuration and the corrosion resistance test method, the multiple test units 2 are connected in series to the single energizing means 4, so that the voltage value applied to the respective test units 2 can be fixed, and multiple tests can be simultaneously performed. In a test method that causes corrosion of a coated metal member to progress by energization, clogging may sometimes occur at a test target location due to air bubbles generated during the test or due to solid content included in a test solution. Clogging occurring in one of the test units 2 causes the electric current to become less likely to flow and also affects another test unit 2, thus making it difficult to perform the test accurately and efficiently. In contrast, this configuration determines that a test unit 2 in which the voltage has exceeded the predetermined value is clogged at the test target location among the multiple test units, and switches the circuit so as to disconnect the relevant test unit from the series circuit 3. Consequently, the test can be performed accurately and efficiently without affecting another test unit.

A clogged test unit 2 disconnected from the series circuit is energized by being connected again to the series circuit after a predetermined time period, so that it is checked whether the clogging has been resolved. If the voltage has not reached the predetermined value, the test is resumed by determining that the clogging has been resolved, whereby the test efficiency can be further enhanced. Moreover, for the test unit that has resumed the test, the test is continued while compensating for the energization time period corresponding to the disconnection time period from the series circuit, so that the test time period can be adjusted, thereby preventing a decrease in the test efficiency and the test accuracy.

Other embodiments of the present disclosure will be described below in detail. In the description of these embodiments, sections identical to those in the first embodiment will be given the same reference signs, and detailed explanations thereof will be omitted.

### Second Embodiment

Fig. 5 is a schematic configuration diagram illustrating an example of a corrosion resistance test apparatus according to a second embodiment. The second embodiment is different from the first embodiment in terms of the configuration of the switching means. In the first embodiment, the switching means 5 is a current control element formed of an FET or the like connected to the wire 32a that forms the bypass circuit 32 with respect to each test unit 2. However, the switching means is not limited to this configuration.

As shown in Fig. 5, in each of test units 201 and 202, the switching means may include switches 5a and 5b provided on the front and rear wires 31a and 31b, and a switch 5c provided in the bypass circuit 32. Each of the switches 5a to 5c switches between an on position for connecting front and rear wires in series and an off position for disconnecting the test unit 201 or 202 from the series circuit 3. Each of the switches 5a to 5c is electrically connected or wirelessly connected to the control device 7, and the switching between the on position and the off position is controlled by the control device 7.

Referring to Fig. 5, in the test unit 201 at the left side, the switches 5a and 5b are in the on position and the switch 5c in the bypass circuit is in the off position, and the test unit 201 is connected to the series circuit 3. In the test unit 202 at the right side, the switches 5a and 5b are in the off position and the switch 5c in the bypass circuit is in the on position, and the test unit 202 is disconnected from the series circuit 3.

### Third Embodiment

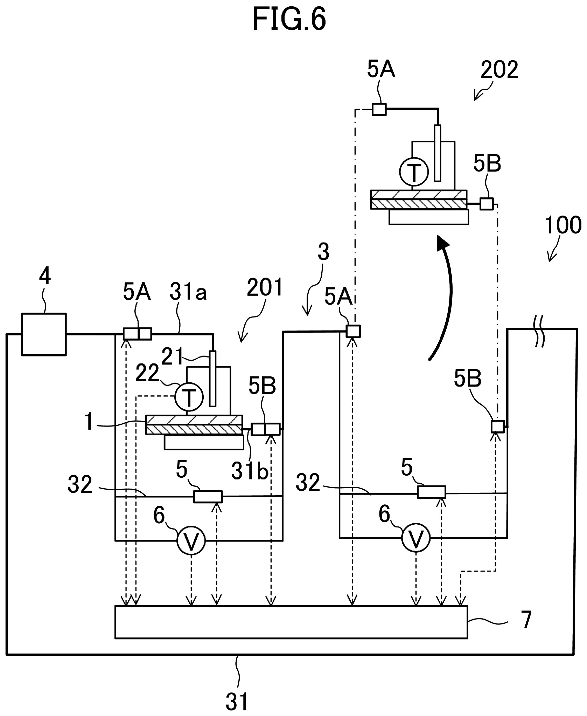

Fig. 6 is a schematic configuration diagram illustrating an example of a corrosion resistance test apparatus according to a third embodiment. The third embodiment is different from the above embodiments in terms of the configuration of the switching means. As shown in Fig. 6, in each of test units 201 and 202, the switching means may be disconnecting means, such as connectors 5A and 5B, provided on the front and rear wires 31a and 31b and physically disconnecting the test unit 201 or 202 from the series circuit. Each of the connectors 5A and 5B is electrically connected or wirelessly connected to the control device 7, and the switching may be controlled by the control device 7. In Fig. 6, the test unit 202 at the right side has the connectors 5A and 5B that are in a disconnected state and that are detached from the series circuit.

### Another Embodiment of Test Units

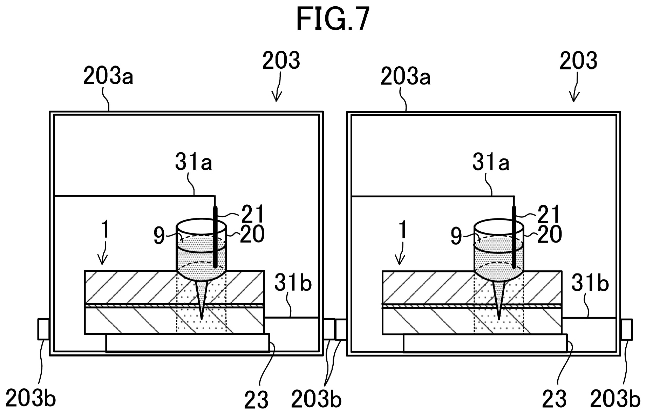

Fig. 7 schematically illustrates an example of another embodiment of test units. As shown in Fig. 7, each of test units 203 may be accommodated within a housing 203a. In this embodiment, each housing 203a is provided with a connector 203b, and multiple test units are readily connectable and disconnectable. The connectors 203b enable multiple test units to be arranged vertically and/or horizontally and be electrically connected to each other, thereby achieving compactness of the test apparatus as well as improved workability.

Other solutions for resolving clogging in a clogged test unit may include, for example, interchanging the anode and the cathode, vibrating the coated metal member, and/or stirring the water-containing material, in addition to waiting for time to elapse. Furthermore, even in a state where clogging has not occurred, when a solution for resolving (preventing) clogging is executed during a test, the test unit may be disconnected from the series circuit, or each type of measuring device may be disconnected.

The present disclosure is extremely useful in being able to further shorten the test time and reduce measurement errors in a corrosion resistance test for a coated metal member.

## Claims

1. A corrosion resistance test method for a coated metal member (1) formed of a metallic substrate (10) provided with a surface treatment coating (12), the corrosion resistance test method comprising:
a preparation step (S1) for preparing a series circuit (3), switching means (5), and voltage detecting means (6), the series circuit (3) having a plurality of test units (2) connected in series, each test unit (2) having an energizing section configured to energize a test target location (E) of the coated metal member (1), the switching means (5) being configured to disconnect the test unit (2) from the series circuit (3) and form the series circuit (3) in place of the test unit (2), the voltage detecting means (6) being configured to detect a voltage in the test unit (2);
an energization step (S2) for applying a constant voltage or a constant current to the series circuit (3) by using energizing means (4) provided in the series circuit (3) to cause corrosion of the coated metal member (1) to progress;
a circuit switching step (S4) for monitoring the voltage of each test unit (2) detected by the voltage detecting means (6) in the energization step (S2) and disconnecting, from the series circuit (3), the test unit (2) in which the voltage has exceeded a predetermined threshold value.

2. The corrosion resistance test method according to Claim 1, further comprising:
an energization inspection step (S5) for controlling the switching means (5) to connect the test unit (2) disconnected from the series circuit (3) to the series circuit (3) and energize the test unit (2) at every predetermined time interval, and inspecting whether or not the voltage of the test unit (2) detected by the voltage detecting means (6) during energization exceeds the predetermined threshold value;
a test resuming step (S6) for causing the test unit (2) to be continuously connected to the series circuit (3) and causing the corrosion of the coated metal member (1) to resume when the voltage of the test unit (2) does not exceed the predetermined threshold value in the energization inspection step (S5); and
a test-time-period adjustment step (S7) for disconnecting, from the series circuit (3), the test unit (2) for which a predetermined energization time period has elapsed and terminating a test, and compensating for an energization time period corresponding to a time period during which the test unit (2) that has resumed the corrosion of the coated metal member (1) in accordance with the test resuming step (S6) is disconnected from the series circuit (3).

3. The corrosion resistance test method according to Claim 2,
wherein the preparation step (S1) further includes preparing heating means (23) configured to heat the test target location (E) of the coated metal member (1),
wherein the energization step (S2) includes causing the corrosion of the coated metal member (1) to progress by applying the constant voltage or the constant current to the series circuit (3) while heating the test target location (E) of the coated metal member (1) to a predetermined temperature, and
wherein the test unit (2) for which the predetermined energization time period has elapsed is disconnected from the series circuit (3), the heating is stopped or the test target location (E) is decreased in temperature, and the test is terminated.

4. The corrosion resistance test method according to any one of Claims 1 to 3,
wherein each of the test units (2) has a container (20) and an electrode (21), the container (20) being configured to retain a water-containing material (9) in contact with the surface treatment coating (12), the electrode (21) being configured to come into contact with the water-containing material (9) contained in the container (20), and
wherein the energizing means (4) causes the corrosion of the coated metal member (1) to progress by applying a direct-current constant voltage or constant current between the electrode (21) and the metallic substrate (10), the electrode (21) serving as an anode and the metallic substrate (10) serving as a cathode.

5. A corrosion resistance test apparatus (100) for a coated metal member (1) formed of a metallic substrate (10) provided with a surface treatment coating (12), the corrosion resistance test apparatus (100) comprising:
test units (2) each having an energizing section configured to energize a test target location (E) of the coated metal member (1);
a series circuit (3) having the plurality of test units (2) connected in series;
energizing means (4) provided in the series circuit (3) and configured to apply a constant voltage or a constant current to the series circuit (3) to cause corrosion of the coated metal member (1) to progress;
switching means (5) configured to disconnect each test unit (2) from the series circuit (3) and form the series circuit (3) in place of the test unit (2);
voltage detecting means (6) configured to detect a voltage in each test unit (2); and
a control device (7) configured to use the voltage detecting means (6) to monitor the voltage of each test unit (2) and use the switching means (5) to disconnect, from the series circuit (3), the test unit (2) in which the voltage has exceeded a predetermined threshold value.

6. The corrosion resistance test apparatus (100) according to Claim 5,
wherein the control device (7) is configured to
control the switching means (5) to connect the test unit (2) disconnected from the series circuit (3) to the series circuit (3) and energize the test unit (2) at every predetermined time interval,
inspect whether or not the voltage of the test unit (2) detected by the voltage detecting means (6) during energization exceeds the predetermined threshold value,
cause the test unit (2) to be continuously connected to the series circuit (3) and cause the corrosion of the coated metal member (1) to resume when the voltage of the test unit (2) does not exceed the predetermined threshold value, and
disconnect, from the series circuit (3), the test unit (2) for which a predetermined energization time period has elapsed and terminate a test, and compensate for an energization time period corresponding to a time period during which the test unit (2) that has resumed the corrosion of the coated metal member (1) is disconnected from the series circuit (3).

7. The corrosion resistance test apparatus (100) according to Claim 6, further comprising heating means (23) configured to heat the test target location (E) of the coated metal member (1),
wherein the control device (7) is configured to
control the heating means (23) and the energizing means (4) to apply the constant voltage or the constant current to the series circuit (3) while heating the test target location (E) of the coated metal member (1) to a predetermined temperature, and
disconnect the test unit (2) for which the predetermined energization time period has elapsed from the series circuit (3), stop the heating or decrease a temperature of the test target location (E), and terminate the test.

8. The corrosion resistance test apparatus (100) according to any one of Claims 5 to 7,
wherein each of the test units (2) has a container (20) and an electrode (21), the container (20) being configured to retain a water-containing material (9) in contact with the surface treatment coating (12), the electrode (21) being configured to come into contact with the water-containing material (9) contained in the container (20), and
wherein the energizing means (4) causes the corrosion of the coated metal member (1) to progress by applying a direct-current constant voltage or constant current between the electrode (21) and the metallic substrate (10), the electrode (21) serving as an anode and the metallic substrate (10) serving as a cathode.
